(19) Europäisches Patentamt
European Patent Office
Office européen des brevets

(11) Veröffentlichungsnummer: **0 041 688**
**B1**

(12) # EUROPÄISCHE PATENTSCHRIFT

(45) Veröffentlichungstag der Patentschrift: **13.07.83**

(51) Int. Cl.³: **C 09 B 67/46**, C 09 B 67/38, D 06 P 1/613, C 09 B 67/28

(21) Anmeldenummer: **81104244.9**

(22) Anmeldetag: **03.06.81**

(54) **Verwendung von veresterten Oxalkylaten aromatischer Hydroxyverbindungen zum Präparieren von Farbmitteln und entsprechende Farbmittelzubereitungen.**

(30) Priorität: **10.06.80 DE 3021712**

(43) Veröffentlichungstag der Anmeldung: **16.12.81 Patentblatt 81/50**

(45) Bekanntmachung des Hinweises auf die Patenterteilung: **13.07.83 Patentblatt 83/28**

(84) Benannte Vertragsstaaten: **BE CH DE FR GB IT LI NL**

(56) Entgegenhaltungen:
**CH A 578 607**
**DE A 1 955 590**
**DE A 2 104 202**
**FR A 2 151 101**

(73) Patentinhaber: **HOECHST AKTIENGESELLSCHAFT**
**Postfach 80 03 20**
**D-6230 Frankfurt/Main 80 (DE)**

(72) Erfinder: **Schneider, Manfred**
**Cuntzstrasse 1**
**D-6239 Eppstein/Taunus (DE)**
Erfinder: **Kruse, Hubert**
**Luisenstrasse 33**
**D-6233 Kelkheim (Taunus) (DE)**
Erfinder: **Opitz, Konrad, Dr.**
**Schwedenstrasse 22**
**D-6237 Liederbach (DE)**

**EP 0 041 688 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Verwendung von veresterten Oxalkylaten aromatischer Hydroxyverbindungen zum Präparieren von Farbmitteln und entsprechende Farbmittelzubereitungen

Gegenstand der Erfindung ist die Verwendung wasserlöslicher Verbindungen der Formel I

$$A-\left[O-(X-O)_n-\begin{matrix}-H_m\\-(CO-R)_{p-m}\end{matrix}\right]_p \qquad (I)$$

worin

A ein Arylrest ist,

X für gleiche oder verschiedene Gruppen der Formel

$$-CH_2-CH_2- \quad \text{und} \quad -CH_2-CH(CH_3)-$$

steht,

R—CO— gleiche oder verschiedene Reste einer Carbonsäure mit bis zu 22 C-Atomen bedeutet,

n für gleiche oder verschiedene Zahlen von 8 bis 150 steht,

p eine Zahl von 1 bis 10 ist und

m für 0 bis (p – 0,5) steht,

zum Präparieren von Farbmitteln wobei Präparationen auf der Basis von Öl-in-Wasser-Emulsionen ausgenommen sind sowie die entsprechenden Farbmittelzubereitungen, die durch einen Gehalt an wasserlöslichen Verbindungen der Formel I gekennzeichnet sind.

Die Verbindungen der Formel I können durch partielle oder vollständige Veresterung von Oxalkylaten der Formel II

$$A-[O-(X-O)_n-H]_p \qquad (II)$$

in der A, X, n und p die vorstehend genannten Bedeutungen haben, mit einer Carbonsäure der Formel III

$$R-COOH \qquad (III)$$

in der R die vorstehend genannte Bedeutung hat, einem Halogenid dieser Säure, insbesondere dem Säurechlorid, oder einem entsprechenden Säureanhydrid oder mit einem Gemisch von 2 oder mehreren den Rest R—CO— einführenden Mitteln hergestellt werden. Diese Veresterung erfolgt nach an sich bekannten Methoden, gegebenenfalls unter Zusatz eines entsprechenden Katalysators. Die Verbindungen der Formel I werden deshalb im folgenden auch als « Veresterungsprodukte » bezeichnet.

Die Oxalkylate der Formel II können durch Umsetzen von Phenolen der Formel IV

$$A-(OH)_p \qquad (IV)$$

mit Ethylenoxid und/oder Propylenoxid hergestellt werden.

Für den erfindungsgemäßen Einsatz wählt man Produkte der Formel I aus, die eine gute Wasserlöslichkeit aufweisen, vorzugsweise von mindestens 100 g/l, wobei man je nach dem beabsichtigten Einsatzzweck die hydrophilen und hydrophoben Gruppen des Moleküls aufeinander abstimmt. Diese Abstimmung erfolgt durch Auswahl der phenolischen Verbindung IV, Art und Menge des Alkylenoxids sowie Art und Menge des Acylierungsmittels.

Die Ausgangsphenole der Formel IV können einen oder mehrere aromatische Kerne enthalten, wobei mehrkernige Phenole kondensierte oder nicht kondensierte Ringsysteme enthalten können. Bei nicht kondensierten Ringsystemen sind die aromatischen Kerne durch direkte Bindungen oder bivalente Gruppen verknüpft, beispielsweise Sauerstoffatome, Sulfongruppen oder aliphatische Brücken, insbesondere niedere Alkylenbrücken. Die aromatischen Kerne können hierbei unsubstituiert sein oder bis zu drei gleiche oder verschiedene Substituenten enthalten, vorzugsweise Alkylgruppen mit bis zu 16 Kohlenstoffatomen, niedere Phenylalkylgruppen oder Halogenatome, insbesondere Chloratome. Besonders bevorzugte mehrkernige Phenole sind Novolake, die durch Umsetzung von vorzugsweise einkernigen Phenolen, insbesondere Alkylphenolen, mit niederen Alkanalen, insbesondere Formaldehyd, erhalten werden. Andere bevorzugte mehrkernige Phenole sind Di-(hydroxyphenyl)-methan, Di-(hydroxyphenyl)-propan und Di-(hydroxybiphenyl), sowie von den kondensierten mehrkernigen Phenolen 1- und 2-Naphthol. Bevorzugte einkernige Phenole sind Phenol, Resorcin, Benzylphenol, Phenethylphenol, Chlorphenol, p-tert.-Butylphenol, Tributylphenol, Octylphenol, Nonylphenol oder Dodecylphenol.

Zur Erzielung der gewünschten Wasserlöslichkeit ist als Alkylenoxid Ethylenoxid bevorzugt ; aus dem gleichen Grund wird das Ethylenoxid, falls es zusammen mit Propylenoxid zum Einsatz kommt, zweckmäßig im Überschuß angewandt, wobei die beiden Alkylenoxide im Gemisch oder absatzweise zur Anwendung kommen können.

Als Carbonsäuren der Formel III, die auch in Form ihrer acylierend wirkenden Derivate, wie

beispielsweise als Halogenide, Anhydride oder Ester eingesetzt werden können, kommen bevorzugt Alkan- oder Alkenmonocarbonsäuren mit bis zu 22 Kohlenstoffatomen in Betracht, wobei der Begriff « Alkencarbonsäure » auch mehrfach ungesättigte Verbindungen umfassen soll, wie sie beispielsweise in natürlichen Fettsäuren vorkommen.

Besonders bevorzugte Veresterungsprodukte weisen ein Molgewicht von 500 bis 10 000, vorzugsweise 500 bis 5 000, insbesondere 1 000 bis 5 000 auf, sowie — bezogen auf das Gesamtgewicht — ein Alkylenoxidanteil von 50 bis 98 %, vorzugsweise 70 bis 96 %, insbesondere 80 bis 95 %.

Vorzugsweise sind mindestens die Hälfte aller vorhandenen endständigen Hydroxygruppen der Alkylenoxidketten acyliert, wobei, wenn p von 1 verschieden ist, das Produkt aus n und p vorzugsweise 25 bis 300 beträgt. Wie jedoch schon vorstehend ausgeführt wurde, ist für die Auswahl der einzelnen « Bausteine » der Verbindungen der Formel I das Spektrum der angestrebten Eigenschaften, also in erster Linie die Ausgewogenheit von hydrophilen und hydrophoben Gruppen maßgeblich, insbesondere die ausreichende Wasserlöslichkeit.

In besonders bevorzugten Veresterungsprodukten der Formel I steht A für einen Alkylphenylrest mit Alkylresten von 3 bis 16 Kohlenstoffatomen oder einen sich von solchen Phenolen und Formaldehyd ableitenden Novolak, X für Ethylen und R für einen Rest der Formel V

$$C_xH_{2x+1} \qquad (V)$$

in der x 0 bis 22 ist, oder einen Rest der Formel VI

$$C_yH_{2y-1} \qquad (VI)$$

in der y 2 bis 22 ist.

Die Verbindungen der Formel I sind oberflächenaktive Stoffe mit einer Fülle von vorteilhaften Eigenschaften, die sie besonders zum Präparieren von wasserunlöslichen Farbmitteln befähigen, vor allem für Pigmente sowie wasserunlösliche Farbstoffe, insbesondere Küpen- und Dispersionsfarbstoffe. Es lassen sich damit erfindungsgemäß hochkonzentrierte, dispergiermittelarme Flüssig- und Pulvereinstellungen solcher Farbmittel herstellen, wobei die feinverteilten Farbmittel im allgemeinen eine Teilchengröße unter 5 µm, vorteilhaft unter 3 µm aufweisen.

Die bisher bekannten Zubereitungen von Farbmitteln weisen noch eine Reihe von Nachteilen auf, die die erfindungsgemäßen Farbmittelzubereitungen nicht zeigen. So verursachen z. B. herkömmliche Zubereitungen von Dispersionsfarbstoffen, die ausschließlich anionische Dispergiermittel enthalten, beim Anrühren von Druckpasten mit synthetischen Verdickungsmitteln einen unerwünschten Abfall der Viskosität. Normalerweise steigt mit zunehmendem Gehalt an Dispergiermittel im Mahl- oder Knetteig auch die Viskosität der Zubereitung stark an, so daß in ungünstigen Fällen, vor allem bei etwas höheren Temperaturen, die Einstellungen dickflüssig oder sogar fest werden. Andererseits kann der Anteil des anionischen Dispergiermittels nicht beliebig verringert werden, da sonst oft instabile oder von vornherein ungenügend fein verteilte Teilchen aufweisende Dispersionen erhalten werden.

In den Färbereien werden aus Rationalisierungsgründen immer kürzere Flottenverhältnisse der Färbebäder angestrebt. Dafür werden möglichst hochkonzentrierte Farbstoffeinstellungen bevorzugt. Die hohen Anteile anionischer Dispergiermittel in herkömmlichen Dispersionsfarbstoffpräparationen können bei modernen Färbeverfahren, wie in der Jet-Färberei, zu unerwünschter Schaumbildung führen. Oft wird auch ein starkes Farbstoffrückhaltevermögen, vor allem bei Klotzfärbungen, beanstandet. In Druckereien bedingt der hohe Dispergiermittelanteil in üblichen Dispersionsfarbstoffpräparationen außer dem schon genannten ungünstigen Einfluß auf die Viskosität der Druckpasten auch ein aufwendiges Nachwaschen der Drucke.

Die Erfindung erlaubt es nun, Farbmittelzubereitungen herzustellen, die den genannten Einschränkungen nicht unterworfen sind und sich besonders für eine Reihe von Spezialaufgaben eignen. So können erfindungsgemäße wäßrige Farbmitteldispersionen ohne Qualitätseinbuße zu Pulvern getrocknet werden. Sowohl die Pulver als auch die Flüssigeinstellungen eignen sich hervorragend zum Färben und Bedrucken der verschiedensten Materialien.

Im folgenden werden weitere bevorzugte Ausgestaltungen der Erfindung näher erläutert, wobei sich Prozentangaben auf das Gewicht beziehen, wenn nichts anderes angegeben ist.

Bevorzugte Zubereitungen enthalten 5-90, insbesondere 10 bis 80 % Farbmittel, 2 bis 30, insbesondere 2 bis 20 % Veresterungsprodukt, bis zu 20, insbesondere bis zu 10 % anionische Dispergiermittel und bis zu 70 % Wasser und/oder Wasserrückhaltemittel. Darüberhinaus können die erfindungsgemäßen Zubereitungen in solchen Präparationen übliche Hilfsmittel enthalten, beispielsweise hygroskopische Mittel, Schaumdämpfer, Entstaubungsmittel oder Konservierungsmittel. Enthalten diese Präparationen weitere in solchen Einstellungen übliche Hilfsmittel, so können diese vor, während oder nach der Dispergierung der Farbmittel zugesetzt werden.

Sofern die erfindungsgemäßen Präparationen anionische Dispergiermittel enthalten, werden die hierfür üblicherweise verwendeten Dispergiermittel eingesetzt. Bevorzugt sind Kondensationsprodukte aus aromatischen Sulfonsäuren und Formaldehyd, insbesondere Kondensationsprodukte aus Alkylnaphthalinsulfonsäuren, vor allem Methylnaphthalinsulfonsäuren und Formaldehyd, wie sie aus der DE-PS 2 442 514 bekannt sind. Geeignet sind auch Kondensationsprodukte aus gegebenenfalls substituiertem Phenol mit Formaldehyd und Natriumbisulfit sowie Alkalisalze von Ligninsulfonsäuren.

Im Vergleich zu üblichen Farbmittelzubereitungen zeichnen sich die erfindungsgemäßen Präparationen durch einen sehr geringen Gehalt an oberflachenaktiven Substanzen aus.

Trotz des geringen Einsatzes an oberflächenaktiven Substanzen, insbesondere an anionischen Dispergiermitteln, erhält man erfindungsgemäße Präparationen, die auch bei sehr hohem Farbmittelgehalt als Flüssigeinstellung gut fließfähig sind. Darüberhinaus zeichnen sich die erfindungsgemäßen flüssigen Präparationen durch eine sehr gute Lagerstabilität sowohl bei Raumtemperatur als auch bei erhöhten Temperaturen aus. Weiterhin ist die hervorragende Redispergierbarkeit der erfindungsgemäßen flüssigen und pulverförmigen Präparationen hervorzuheben.

Wegen der guten Verträglichkeit mit synthetischen Verdickungsmitteln können die Präparationen in Drucktinten für den Rouleauxdruck mit sehr « seichten » Gravuren eingesetzt werden, wobei farbstarke Drucke erhalten werden. Ebenso ist der Einsatz im Rotationsfilmdruck möglich.

Die Herstellung der erfindungsgemäßen Präparationen kann nach allen bekannten Verfahren erfolgen. Zur Herstellung von Farbmittel-Präparationen wird das Farbmittel oder eine Mischung von Farbmitteln mit einem oder mehreren der genannten Veresterungsprodukte, gegebenenfalls einem anionischen Dispergiermittel sowie gegebenenfalls anderen Zusätzen vermischt und einer mechanischen Zerkleinerung unterworfen. Hierbei kann die Reihenfolge der Zugabe der Komponenten auch verändert werden. Die mechanische Zerkleinerung erfolgt bevorzugt in Knetern, Kugelmühlen, Dispergatoren, Perlmühlen, Sandmühlen oder Attritoren. Das Erreichen der gewünschten Feinverteilung von im allgemeinen etwa 5 µm, vorzugsweise < 3 µm Teilchengröße kann durch einen Filtertest oder mit dem Mikroskop festgestellt werden. Die so erhaltenen Präparationen enthalten die Farbmittel in stabiler, feinverteilter Form.

Die Feinverteilung bleibt auch bei mehrwöchiger Lagerung sowohl bei Raumtemperatur als auch bei 50 °C erhalten und wird auch durch Kälteeinwirkung nicht beeinträchtigt.

Zur Herstellung einer pulverförmigen Präparation können wäßrige Präparationen in üblicher Weise, beispielsweise mittels Zerstäubungstrocknung, getrocknet werden. Die so erhaltenen pulverförmigen Präparationen werden durch einfaches Einrühren in Wasser oder in Bindemittellösungen gut redispergiert.

Durch den geringen Gehalt an oberflächenaktiven Substanzen, insbesondere an anionischen Dispergiermitteln, tritt beim Einsatz der erfindungsgemäßen Farbmittelpräparationen in Färbebädern oder Druckpasten keine retardierende Wirkung auf und es werden brillante Farbtöne erhalten. Außerdem kann im Falle des Direktdrucks die erforderliche Nachwäsche wesentlich verkürzt werden oder bei Verwendung körperarmer Verdickungen sogar ganz entfallen, ohne daß es zu einer merklichen Griffverschlechterung der bedruckten Ware käme oder Brillanz und Farbton beeinträchtigt würden. In diesem Falle werden die Präparationen vorteilhaft auf einen pH-Wert von etwa 6 bis 8 eingestellt.

In einer besonders bevorzugten Ausgestaltung der Erfindung werden Farbstoffe eingesetzt, die bei atmosphärischem Druck zwischen 150 und 220 °C zu mindestens 60 % unzersetzt sublimieren, insbesondere Dispersionsfarbstoffe aus der Reihe der Mono- oder Disazo-, Anthrachinon-, Chinophthalon-, Nitro-, Azomethin-, Naphthalintetracarbonsäure- oder Benzoxanthenfarbstoffe oder Mischungen solcher Farbstoffe. Die so erhaltenen Präparationen eignen sich zur Herstellung von Druckfarben für das Bedrucken von Transferpapieren für den Thermodruck.

In den folgenden Beispielen beziehen sich Prozentangaben und Teile auf das Gewicht, sofern nichts anderes angegeben ist.

Beispiel 1

375 Teile des trockenen Farbstoffes der Formel (1)

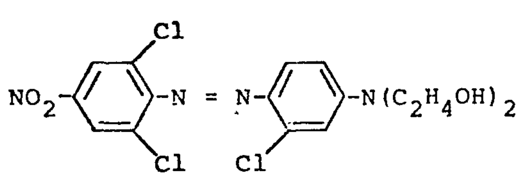

(1)

werden in einer Lösung, bestehend aus 62,5 Teilen eines mit Ameisensäure veresterten ethoxylierten Nonylphenols mit einem Molgewicht von 1 600 und einem Ethylenoxidanteil von 85 % (im folgenden « nicht-ionogenes Dispergiermittel I ») und 12,5 Teilen eines Natrium-Ligninsulfonates (im folgenden « anionisches Dispergiermittel A »), 65 Teilen Ethylenglykol, 3 Teilen Natrium-Zink-Dithiocarbaminat als Konservierungsmittel und 300 Teilen Wasser in einer Perlmühle mit Siliquarzitperlen gemahlen. Nach 5 Stunden erhält man eine Dispersion, deren Teilchen zu über 90 % kleiner als 3 µm sind. Die Präparation wird mit Wasser auf 1 000 Teile aufgefüllt und von den Perlen abgetrennt. Man erhält eine gut fließfähige, sowohl bei Raumtemperatur als auch bei 50 °C längere Zeit stabile Dispersion mit einem Farbstoffgehalt von 37,5 %.

Beispiel 2

400 Teile des trockenen Farbstoffes der Formel (2)

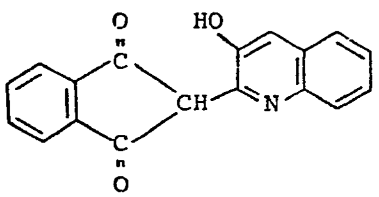

werden in einer Lösung aus 15 Teilen des aus Beispiel D der DE-PS 2 442 514 bekannten Dispergiermittels (im folgenden « anionisches Dispergiermittel B ») und 40 Teilen eines mit Essigsäure veresterten ethoxylierten Novolakharzes, das sieben über $CH_2$-Brücken verknüpfte Nonylphenolreste enthält, mit einem Molgewicht von ca. 6 300 und einem Ethylenoxidanteil von 73 % (im folgenden « nichtionogenes Dispergiermittel II »), 150 Teilen Ethylenglykol, 4 Teile Pentachlorphenolnatrium als Konservierungsmittel und 320 Teilen Wasser in einer Perlmühle mit Siliquarzitperlen gemahlen. Nach 4 Stunden erhält man eine Dispersion, deren Teilchen zu über 90 % kleiner als 3 µm sind. Die Präparation wird mit Wasser auf 1 000 Teile aufgefüllt und von den Perlen abfiltriert. Die 40 % Farbstoff enthaltende Präparation ist über mehrere Monate bei Raumtemperatur und 50 °C lagerstabil.

Verwendet man anstelle der in Beispiel 2 genannten Komponenten die in den folgenden Tabellen angegebenen Farbstoffe und Dispergiermittel und verfährt im übrigen analog Beispiel 2, so resultieren ebenfalls frei fließende, lagerstabile Präparationen.

| Bsp. | Farbmittel Teile | Nr. | nichtionogenes Dispergiermittel Teile | Nr. | anionisches Dispergiermittel Teile | Nr. | Mahl-dauer (Stdn.) | Ethylen-glykol |
|---|---|---|---|---|---|---|---|---|
| 3 | 400 | 3 | 100 | VII | - | - | 5 | 200 |
| 4 | 300 | 4 | 150 | III | 10 | A | 7 | 100 |
| 5 | 300 | 4 | 100 | I | 20 | A | 6 | 100 |
| 6 | 350 | 6 | 80 | IV | 40 | A | 6 | 200 |
| 7 | 375 | 9 | 100 | VII | - | - | 6 | 150 |
| 8 | 300 | 7 | 120 | V | 25 | C | 7 | 150 |
| 9 | 400 | 5 | 60 | IV | 30 | B | 6 | 200 |
| 10 | 350 | 12 | 80 | III | 40 | B | 10 | 200 |
| 11 | 300 | 8 | 75 | I | 25 | A | 7 | 150 |
| 12 | 300 | 10 | 80 | VII | 15 | A | 5 | 200 |
| 13 | 350 | 13 | 120 | II | 20 | C | 6 | 200 |
| 14 | 300 | 7 | 80 | VII | - | - | 8 | 150 |
| 15 | 350 | 7 | 80 | I | 30 | A | 7 | 150 |
| 16 | 375 | 14 | 60 | II | 20 | C | 8 | 100 |
| 17 | 300 | 12 | 120 | V | 30 | A | 7 | 120 |
| 18 | 300 | 11 | 75 | VII | 35 | A | 8 | 200 |
| 19 | 400 | 2 | 80 | VII | - | - | 8 | 200 |
| 20 | 400 | 15 | 40 | VII | 20 | B | 3 | 200 |
| 21 | 450 | 16 | 40 | VII | 20 | B | 4 | 200 |
| 22 | 400 | 17 | 60 | III | 20 | C | 3 | 200 |

| Farbmittel Nr. | Formel | Farbton |
|---|---|---|
| 3 | 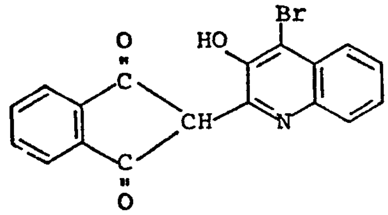 | gelb * |
| 4 | 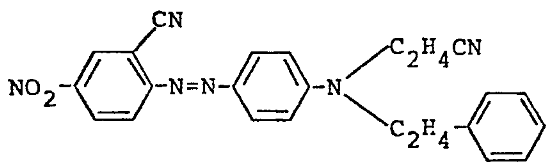 | rot * |
| 5 | 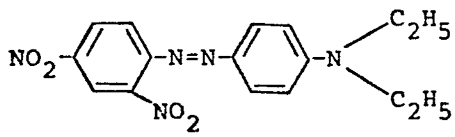 | violett * |
| 6 | 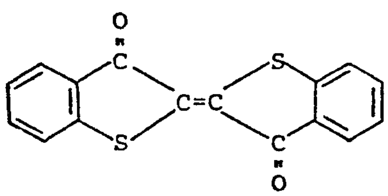 | rot * |
| 7 | 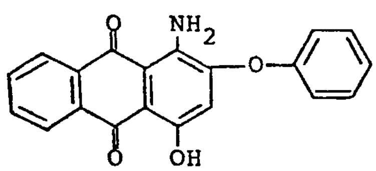 | rot * |
| 8 | 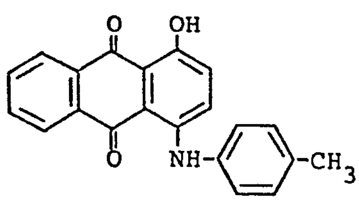 | blau * |
| 9 | 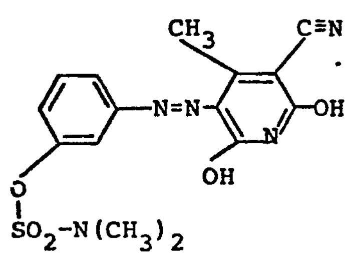 | brillant gelb * |
| 10 | 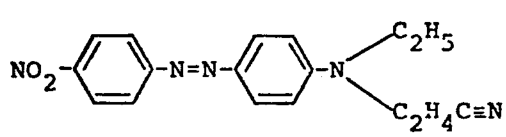 | orange * |

(Fortsetzung)

| Farbmittel Nr. | Formel | Farbton |
|---|---|---|
| 11 | 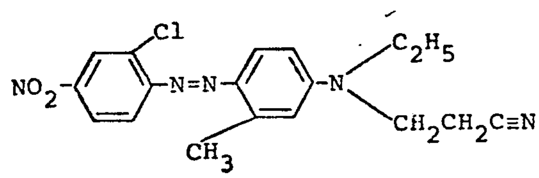 | rot * |
| 12 | 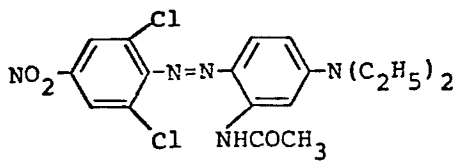 | rotbraun * |
| 13 | 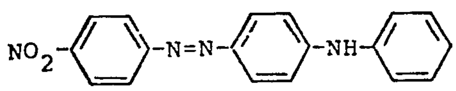 | orange * |
| 14 | 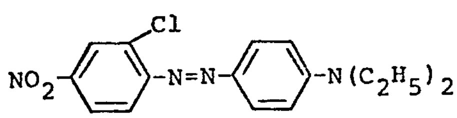 | orange * |
| 15 | 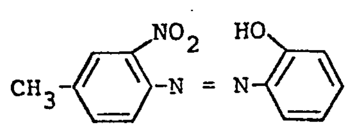 | rot ** |
| 16 | 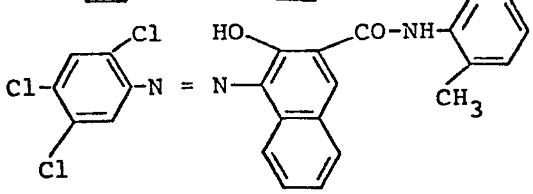 | rot ** |
| 17 | 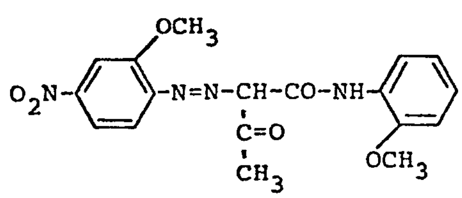 | gelb ** |

* auf Polyester
** Drucke auf Papier

Nichtionogene Dispergiermittel :

III Essigsäureester eines ethoxylierten Tributylphenols, Molgewicht ca. 2 900, Ethylenoxidanteil 90,5 %

IV Ölsäureester eines ethoxylierten Nonylphenols, Molgewicht ca. 3 600, Ethylenoxidanteil 86,5 %

V Essigsäureester eines ethoxylierten Nonylphenols, Molgewicht ca. 2 500, Ethylenoxidanteil 89 %

VI Stearinsäureester eines ethoxylierten Tributylphenols, Molgewicht ca. 2 950, Ethylenoxidanteil 81 %

VII Essigsäureester eines ethoxylierten Nonylphenols, Molgewicht 4 700, Ethylenoxidanteil 94 %.

Anionische Dispergiermittel :

C) Sulfobernsteinsäurehalbester eines ethoxylierten Kondensationsproduktes aus Nonylphenol und Formaldehyd (DE-PS 2 132 403, Beispiel B).

D) Kondensationsprodukte aus Kresol, dem Natrium-Salz der 2-Hydroxynaphthalin-6-sulfonsäure, Formaldehyd und Natriumbisulfit.

Beispiel 23

620 Teile eines feuchten Preßkuchens des Farbstoffes der Formel (11) mit einem Feststoffgehalt von 31,2 % werden mit 70 Teilen des anionischen Dispergiermittels D und 130 Teilen des nichtionogenen Dispergiermittels III dispergiert und mit einer Kugelmühle mit Siliquarzit-Kugeln perlgemahlen. Nach 4 Stunden erhält man eine Dispersion, deren Teilchen zu über 90 % kleiner sind als 3 μm. Der Mahlteig wird von den Perlen abgetrennt und über einen Zerstäubungstrockner bei 180-200 °C Eingangs- und 70-80 °C Ausgangstemperatur sprühgetrocknet. Man erhält ein rieselfähiges Pulver mit einem Farbstoffgehalt von 50 %, welches sich durch Einrühren in einer Druckverdickung, einem wäßrigen Färbebad oder einer wäßrigen Klotzfärbeflotte gut verteilen läßt.

Beispiel 24

783 Teile eines feuchten Preßkuchens des Farbstoffes der Formel (9) mit einem Feststoffgehalt von 40,7 % werden mit 200 g einer wäßrigen Lösung, enthaltend 60 Teile des nichtionogenen Dispergiermittels IV und 20 Teile anionogenes Dispergiermittel D perlgemahlen. Nach 6 Stunden Mahlzeit erhält man eine Dispersion, deren Teilchen zu über 90 % kleiner als 3 μm sind. Die Dispersion wird von den Perlen abgetrennt und wie in Beispiel 23 sprühgetrocknet. Es resultiert ein Pulver mit einem Farbstoffgehalt von 80 % mit den in Beispiel 23 genannten vorteilhaften Eigenschaften.

**Ansprüche**

1. Verwendung wasserlöslicher Verbindungen der Formel I

$$A - \left[ O-(X-O)_n - \left[ \begin{matrix} H_m \\ (CO-R)_{p-m} \end{matrix} \right] \right]_p \qquad (I)$$

worin

A ein Arylrest ist,

X für gleiche oder verschiedene Gruppen der Formel

$$-CH_2-CH_2- \quad \text{und} \quad -CH_2-CH(CH_3)-$$

steht

R—CO gleiche oder verschiedene Reste einer Carbonsäure mit bis zu 22 C-Atomen bedeutet,

n für gleiche oder verschiedene Zahlen von 8 bis 150 steht,

p eine Zahl von 1 bis 10 ist und

m für 0 bis (p − 0,5) steht,

zum Präparieren von Farbmitteln, wobei Präparationen auf der Basis von Öl-in-Wasser-Emulsionen ausgenommen sind.

2. Verwendung von Verbindungen der Formel I nach Anspruch 1, wobei A für einen mit einer $C_3$-$C_{16}$-Alkylgruppe monosubstituierten Phenylrest oder für mindestens zwei durch $CH_2$-Gruppen verknüpfte derartige Phenylreste, R—CO für den Rest einer Alkan- oder Alkencarbonsäure mit bis zu 22 C-Atomen steht, X Ethylen ist und der Anteil der Ethoxygruppen 50 bis 98 Gew.-% bei einem Gesamtmolgewicht von 500-10 000 beträgt.

3. Verwendung von Verbindungen der Formel I nach Anspruch 1 und 2, wobei der Anteil der Ethoxygruppen 70-96 Gew.-% bei einem Gesamtmolgewicht von 500-5 000 beträgt.

4. Verwendung von Verbindungen der Formel I nach Anspruch 1 bis 3, wobei der Anteil der Ethoxygruppen 80-95 Gew.-% bei einem Gesamtmolgewicht von 1 000-5 000 beträgt.

5. Verwendung von Verbindungen der Formel I nach Anspruch 1, wobei A für einen mit ein bis drei $C_3$-$C_{16}$-Alkylgruppen substituierten Phenylrest und R—CO für den Rest einer Alkan- oder Alkencarbonsäure mit bis zu 22 C-Atomen steht, X Ethylen ist und der Anteil der Ethoxygruppen 80-95 Gew.-%, bei einem Gesamtmolgewicht von 1 000-5 000, beträgt.

6. Zubereitungen, gekennzeichnet durch einen Gehalt an einem Farbmittel und einer Verbindung der Formel I nach Anspruch 1.

7. Zubereitungen nach Anspruch 6, gekennzeichnet durch einen Gehalt an einem Dispersions- oder Küpenfarbstoff mit einer Teilchengröße unter 3 μm.

8. Zubereitungen nach Anspruch 6 und 7, gekennzeichnet durch einen Gehalt an einem Dispersionsfarbstoff, welcher bei atmosphärischem Druck zwischen 150 und 220 °C zu mindestens 60 % unzersetzt sublimierbar ist.

9. Zubereitungen nach Anspruch 6 bis 8, gekennzeichnet durch einen Gehalt an

5-90 Gewichts-% Farbmittel,
2-35 Gewichts-% Verbindungen der Formel I,
0-20 Gewichts-% anionischen Dispergiermitteln und
0-70 Gewichts-% Wasser und/oder Hilfsmitteln.

10. Zubereitungen nach Anspruch 6 bis 9, gekennzeichnet durch einen Gehalt an

10-80 Gewichts-% Farbmittel,
2-20 Gewichts-% Verbindungen der Formel I,
0-10 Gewichts-% anionischen Dispergiermitteln und
0-70 Gewichts-% Wasser und/oder Hilfsmitteln.

**Claims**

1. Use of water-soluble compounds of the formula I

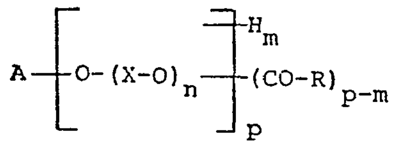

(I)

wherein
A is an aryl radical,
X represents identical or different groups of the formula

$$—CH_2—CH_2— \text{ and } —CH_2—CH(CH_3)—$$

R—CO— denotes identical or different radicals of a carboxylic acid having up to 22 C-atoms,
n represents identical or different numbers from 8 to 150,
p is a number from 1 to 10 and
m represents zero up to (p − 0.5),
for the preparation (finish) of colorants except for compositions based on oil-in-water emulsions.

2. Use of compounds of the formula I as claimed in claim 1, wherein A represents phenyl which is monosubstituted by a $C_3$-$C_{16}$-alkyl group, or represents at least two such phenyl radicals linked by $CH_2$ groups, R—CO represents the radical of an alkanecarboxylic or alkenecarboxylic acid having up to 22 C-atoms, X is ethylene, and the content of ethoxy groups, at a total molecular weight of 500-10,000, is 50 to 98 % by weight.

3. Use of compounds of the formula I as claimed in claims 1 and 2, wherein the content of ethoxy groups, at a total molecular weight of 500-5,000, is 70-96 % by weight.

4. Use of compounds of the formula I as claimed in claims 1 to 3, wherein the content of ethoxy groups, at a total molecular weight of 1,000-5,000, is 80-95 % by weight.

5. Use of compounds of the formula I as claimed in claim 1, wherein A represents phenyl which is substituted by one to three $C_3$-$C_{16}$-alkyl groups and R—CO represents the radical of an alkanecarboxylic or alkenecarboxylic acid having up to 22 C-atoms, X is ethylene, and the content of ethoxy groups, at a total molecular weight of 1,000-5,000, is 80-95 % by weight.

6. Compositions, characterized by content of a colorant and of a compound of the formula I according to claim 1.

7. Compositions as claimed in claim 6, characterized by a content of a disperse dyestuff or a vat dyestuff having a particle size less than 3 μm.

8. Compositions as claimed in claims 6 and 7, characterized by a content of a disperse dyestuff which can be sublimed undecomposed, to the extent of at least 60 %, between 150 and 220 °C under atmospheric pressure.

9. Compositions as claimed in claims 6 to 8, characterized by a content of

5-90 % by weight of colorant,
2-35 % by weight of compounds of the formula I,
0-20 % by weight of anionic dispersing agents and
0-70 % by weight of water and/or auxiliaries.

10. Compositions as claimed in claims 6 to 9, characterized by a content of
10-80 % by weight of colorant,

2-20 % by weight of compounds of the formula I,
0-10 % by weight of anionic dispersing agents and
0-70 % by weight of water and/or auxiliaries.

**Revendications**

1. L'utilisation de composés hydrosolubles de formule I

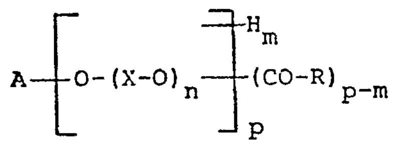

(I)

dans laquelle

A représente un radical aryle,

X des groupes identiques ou différents de formules

$$—CH_2—CH_2— \quad et \quad —CH_2—CH(CH_3)—$$

**R—CO— des radicaux identiques ou différents d'un acide carboxylique pouvant avoir jusqu'à 22 atomes de carbone,**

n représente des nombres identiques ou différents de 8 à 150,

p un nombre de 1 à 10, et

m un nombre de 0 à (p – 0,5).

pour préparer (traiter) des produits colorants, à l'exclusion de préparations à base d'émulsions huile-dans-l'eau (émulsions dites LH).

2. Utilisation selon la revendication 1, de composés de formule I dans lesquels A est un radical phényle monosubstitué par un alkyle en $C_3$ à $C_{16}$ ou bien représente au moins deux de tels radicaux phényle reliés par des groupes $CH_2$, R—CO est le radical d'un acide alcane- ou alcène-carboxylique pouvant avoir jusqu'à 22 atomes de carbone, X est le groupe éthylène et la teneur en groupes éthoxy est de 50 à 98 % en poids, avec une masse moléculaire globale de 500 à 10 000.

3. Utilisation selon la revendication 1 ou 2 de composés de formule I, dont la teneur en groupes éthoxy est de 70 à 96 % en poids, avec une masse moléculaire globale de 500 à 5 000.

4. Utilisation selon l'une quelconque des revendications 1 à 3 de composés de formule I, dont la teneur en groupes éthoxy est de 80 à 95 % en poids, avec une masse moléculaire globale de 1 000 à 5 000.

5. Utilisation selon la revendication 1, de composés de formule I, dans lesquels A est un radical phényle substitué par 1 à 3 alkyles en $C_3$ à $C_7$, R—CO— est le radical d'un acide alcane- ou alcène-carboxylique pouvant avoir jusqu'à 22 atomes de carbone, X est le groupe éthylène et la teneur en groupes éthoxy est de 80 à 95 % en poids, avec une masse moléculaire globale de 1 000 à 5 000.

6. Préparations caractérisées en ce qu'elles contiennent un produit colorant avec un composé de formule I selon la revendication 1.

7. Préparations selon la revendication 6, caractérisées en ce qu'elles contiennent un colorant de dispersion ou un colorant de cuve dont les particules sont inférieures à 3 microns.

8. Préparations selon la revendication 6 ou 7, caractérisées en ce qu'elles contiennent un colorant de dispersion dont au moins 60 % sont sublimables sans se décomposer entre 150 et 220 °C à la pression atmosphérique.

9. Préparations selon l'une quelconque des revendications 6 à 8, caractérisées en ce qu'elles contiennent :

5 à 90 % en poids de colorant,
2 à 35 % en poids de composés de formule I,
0 à 20 % en poids de dispersants anioniques, et
0 à 70 % en poids d'eau et/ou de produits auxiliaires.

10. Préparations selon l'une quelconque des revendications 6 à 9, caractérisées en ce qu'elles contiennent :

10 à 80 % en poids de colorant,
2 à 20 % en poids de composés de formule I,
0 à 10 % en poids de dispersants anioniques, et
0 à 70 % en poids d'eau et/ou de produits auxiliaires.